# EUROPÄISCHE PATENTANMELDUNG

(11) **EP 1 103 593 A1**
(43) Veröffentlichungstag der Anmeldung: **30.05.2001**
(21) Anmeldenummer: 00119795.3
(22) Anmeldetag: 12.09.2000
(51) Int. Cl.: C10L 1/00, C10L 1/18, C10L 1/12, H01M 8/00

(54) **Flammfärbeadditiv für Methanol zum Betreiben eines Brennstoffzellensystems**

(30) Priorität: 24.11.1999 DE 19956375
(71) Anmelder: XCELLSIS GmbH, 73230 Kirchheim / Teck-Nabern (DE)
(72) Erfinder: Autenrieth, Rainer, 71723 Grossbottwar (DE)
(74) Vertreter: Kocher, Klaus-Peter Dipl.-Phys

(57) **Zusammenfassung**

Die Erfindung betrifft ein Flammfärbeadditiv für Methanol zum Betreiben eines Brennstoffzellensystems, wobei das Flammfärbeadditiv NaCl und/oder eine organische Verbindung eines Elements der 1. Hauptgruppe und/oder der 2. Hauptgruppe und/oder der 3. Nebengruppe und/oder der 9. Nebengruppe aufweist.

## Beschreibung

Die Erfindung betrifft ein Flammfärbeadditiv für Methanol zum Betreiben eines Brennstoffzellensystems gemäß dem Oberbegriff des Anspruchs 1.

Es ist bekannt, Methanol als Wasserstofflieferant zum Betreiben von Brennstoffzellensystemen zu verwenden. Da Methanol im wesentlichen farblos verbrennt, sind besonders beim Einsatz von Brennstoffzellensystemen in Fahrzeugen Maßnahmen wünschenswert. Zwar ist z.B. aus der US 4,932,979 der Zusatz von Flammfärbeadditiven an sich bekannt. Dort wird Methanol mit Flammfärbeadditiven und Schmiermitteln versetzt, die eine möglichst rückstandsfreie und schadstoffarme vollständige Verbrennung des Methanols erlauben. Bei der Reformierung von Methanol und auch bei anderen Prozessen im Brennstoffzellensystem werden jedoch Katalysatoren eingesetzt, auf die bereits geringe Mengen von Fremdstoffen schädlich wirken. Aus diesem Grund wird in Brennstoffzellensystemen Methanol nur mit sehr hohem Reinheitsgrad eingesetzt.

Es wurde bereits in einer älteren Anmeldung PCT/EP/99/07662 vorgeschlagen, im Crashfall Methanol mit einem Additiv aus einem Vorratsbehälter zu versehen, welches eine Flammfärbung verursacht. Dadurch wird erreicht, daß die im Brennstoffzellensystem verwendeten Katalysatoren nicht unnötig durch Zusatzstoffe im Methanol belastet werden, da die Zugabe nur im Schadensfall erfolgt, bzw. es wird davon ausgegangen, daß der Schaden durch den Crashfall höher ist als durch durch Zusatzstoffe verschmutzte oder unbrauchbare Katalysatoren.

Es ist die Aufgabe der Erfindung, ein wasserstoffhaltiges Betriebsmittel für Brennstoffzellen anzugeben, welches für den Betrieb von Brennstoffzellenfahrzeugen geeignet ist und welches eine ausreichende Flammfärbung aufweist.

Diese Aufgabe wird bei einem gattungsgemäßen Betriebsmittel gemäß Anspruch 1 durch die Merkmale im kennzeichnenden Teil des Anspruchs gelöst.

Erfindungsgemäß wird als wasserstoffhaltiges Betriebsmittel ein mit einem katalysatorneutralen Flammfärbeadditiv versetzter kohlenstoffhaltiger Wasserstoffträger, vorzugsweise Methanol, verwendet.

Bevorzugt wird ein Acetat, besonders bevorzugt Natriumacetat zugesetzt. Dies bewirkt eine deutliche Flammfärbung. Gleichzeitig ist eine negative Wirkung auf die Katalysatormaterialien, insbesondere die bei der Reformierung von Methanol verwendeten Katalysatoren, nicht zu erkennen. Dies erlaubt eine Zugabe des Flammfärbeadditivs während des normalen Betriebs.

Weitere Vorteile und Ausgestaltungen der Erfindung gehen aus den weiteren Ansprüchen und der Beschreibung hervor.

Durch Zusatz von flammfärbenden Additiven zeigt Methanol beim Verbrennen eine deutliche Flammfärbung. Zweckmäßig ist die Verwendung von flammfärbenden Metallen, z.B. der 1. und 2. Hauptgruppe sowie der 3. und 9. Nebengruppe. Bevorzugt können Salze dieser Stoffe verwendet werden. Besonders vorteilhaft sind organische Verbindungen der Stoffe, insbesondere Acetate.

Besonders bevorzugt sind Verbindungen mit Alkali- oder Erdalkalimetallen. Dabei ist zum Schutz des Katalysators, insbesondere des Katalysators der Reformierungseinheit des Brennstoffzellensystems, eine möglichst geringe Konzentration des Additivs wünschenswert, z.B. < 10 ppm, während eine hohe Konzentration, vorzugsweise > 1000 ppm, für eine deutliche Flammfärbung sorgt. Dabei erweisen sich die flammfärbenden Metallkomponenten der Verbindungen mit Metallen der genannten Haupt- und Nebengruppen als im wesentlichen katalysatorunschädlich. Während jedoch z.B. Chloride zumindest in höheren Konzentrationsbereichen nahe 1000 ppm den Katalysator beeinträchtigen, sind Verbindungen mit organisch gebundenen Metallen wesentlich unschädlicher.

Es zeigt sich, daß insbesondere Natriumacetat als Zusatz in Methanol praktisch keine katalysatorschädigende Wirkung hervorruft, während die Flammfärbeeigenschaften deutlich ausgeprägt sind. Vorteilhaft kann das Additivs in einem Bereich von 10-1000 ppm verwendet werden, ohne daß eine nennenswerte Schädigung beobachtet wird.

Neben Natriumacetat zeichnet sich auch NaCl als günstiges Additiv aus. Der zulässige Konzentrationsbereich ist jedoch geringer als bei der organischen Verbindung. Vorteilhaft ist auch die Verwendung von Kobaltacetat.

Ein bevorzugtes Flammfärbeadditiv besteht aus Natriumacetat. Ein weiteres bevorzugtes Flammfärbeadditiv besteht aus NaCl. Ein weiteres bevorzugtes Flammfärbeadditiv besteht aus einer Mischung von NaCl und/oder organisch gebundenen Elementen der 1. und 2. Hauptgruppe sowie der 3. und 9. Nebengruppe, insbsondere aus Acetaten dieser Elemente.

Der Vorteil der erfindungsgemäßen Flammfärbeadditive liegt darin, daß trotz der Empfindlichkeit der Katalysatoren im Brennstoffzellensystem, insbesondere des Reformierungskatalysators, das wasserstoffhaltige Betriebsmittel auch im Normalbetrieb mit einem Flammfärbeadditiv versehen sein kann.

Damit ist die Sicherheit des Brennstoffzellensystems ohne zusätzlich erhöhten Betriebsaufwand verbessert.

## Patentansprüche

1. Flammfärbeadditiv für Methanol zum Betreiben eines Brennstoffzellensystems,
dadurch gekennzeichnet,
daß das Flammfärbeadditiv NaCl und/oder eine organische Verbindung eines Elements der 1. Hauptgruppe und/oder der 2. Hauptgruppe und/oder der 3. Nebengruppe und/oder der 9. Nebengruppe aufweist.

2. Flammfärbeadditiv nach Anspruch 1,
dadurch gekennzeichnet,
daß das Flammfärbeadditiv ein Acetat aufweist.

3. Flammfärbeadditiv nach Anspruch 1,
dadurch gekennzeichnet,
daß das Flammfärbeadditiv Natriumacetat aufweist.

4. Flammfärbeadditiv nach Anspruch 1,
dadurch gekennzeichnet,
daß das Methanol 10-1000 ppm Flammfärbeadditiv aufweist.
